# EUROPÄISCHE PATENTANMELDUNG

(11) **EP 4 113 484 A1**
(43) Veröffentlichungstag der Anmeldung: **04.01.2023**
(21) Anmeldenummer: 22180101.2
(22) Anmeldetag: 21.06.2022
(51) Int. Cl.: G09B 19/24, B23K 31/12

(54) **SYSTEM UND VERFAHREN ZUM GENERIEREN EINES SCHWEISSPROGRAMMS FÜR EINE SCHWEISSVORRICHTUNG**

(30) Priorität: 30.06.2021 DE 102021116894
(71) Anmelder: Lorch Schweisstechnik GmbH, 71549 Auenwald (DE)
(72) Erfinder: Jaeschke, Birger, 71566 Althütte (DE)
(74) Vertreter: Hoeger, Stellrecht & Partner Patentanwälte mbB

(57) **Zusammenfassung**

Die Erfindung betrifft ein System (10) und ein Verfahren zum Generieren eines Schweißprogramms für eine Schweißvorrichtung (20), die eine Steuerungseinheit (22) umfasst, wobei das System (10) aufweist: eine Eingabeeinheit (100) zum Empfangen von Informationen, die einen Verlauf eines auf der Schweißvorrichtung (20) durchführbaren Schweißprozesses definieren, von einem Benutzer (120), eine Entwicklungseinheit (200), die ausgebildet und programmiert ist, um mindestens eine Datei, die auf die Schweißvorrichtung (20) übermittelbar ist und auf Basis derer das Schweißprogramm auf der Schweißvorrichtung (20) mittels der Steuerungseinheit (22) ausführbar ist, zu generieren basierend auf den Informationen, eine Simulationseinheit (300), die ausgebildet und programmiert ist, um zu der Steuerungseinheit (22) der Schweißvorrichtung (20), für welche das Schweißprogramm generierbar ist mittels der Entwicklungseinheit (200), rechnerisch korrespondierend nachgebildet zu sein hinsichtlich einer funktionalen Äquivalenz oder einer funktionalen Identität, und die ferner ausgebildet und programmiert ist, um das Schweißprogramm, das auf Basis der mindestens einen Datei auf der Schweißvorrichtung (20) mittels der Steuerungseinheit (22) ausführbar ist, funktional äquivalent oder funktional identisch zu der Steuerungseinheit (22) zu simulieren basierend auf der mindestens einen Datei, um ein dazu korrespondierendes Simulationsergebnis zu generieren, und eine Ausgabeeinheit (400) zum Bereitstellen des von der Simulationseinheit (300) generierten Simulationsergebnisses an den Benutzer (120).

## Beschreibung

Die Erfindung betrifft ein System und ein Verfahren zum Generieren eines Schweißprogramms für eine Schweißvorrichtung, die eine Steuerungseinheit umfasst.

Üblicherweise werden neue Schweißprogramme für Schweißvorrichtungen manuell geplant und ausgelegt. Dies erfolgt insbesondere in Form von händischen Skizzen, die einen oder mehrere Schweißprozessvariablen über die zeitliche Dauer eines Schweißvorgangs darstellen. Anschließend wird auf Basis dieser Planungs- und Auslegungsunterlagen bzw. dieser Skizzen das neue Schweißprogramm von einem spezialisierten Programmierer in einer Programmiersprache wie zum Beispiel C oder C++ zeilenweise codiert und compiliert (wobei auch Interpretersprachen einsetzbar sein können). Dies ist ein aufwendiger und zeitintensiver Prozess, der spezifische Fachkenntnisse insbesondere über die Maschinensteuerungseinheit (beispielsweise deren Prozessoreinheit) der Schweißvorrichtung erfordert, Personalkapazitäten enorm bindet und zudem bei der Ausarbeitung des Schweißprogramms nur eine geringe Flexibilität bezüglich nachträglicher Änderungen gewährt.

Die DE 10 2010 002 121 B3 beschreibt ein Lichtbogen-Schweißverfahren, bei dem der zeitliche Verlauf eines Schweißstroms, der als Schweißprozessvariable angesehen werden kann, für eine hohe Abschmelzleistung und eine Stabilisierung der Lichtbogenlänge angepasst werden kann, wodurch der Lichtbogen vom Schweißer einfach zu handhaben ist.

Nachträgliche Änderungen im Schweißprogramm, insbesondere hinsichtlich des Schweißprozessablaufs, können zum Beispiel nach Ausführung des eigentlichen Schweißbetriebs erforderlich sein und können dann nicht ohne Weiteres umgesetzt werden. Änderungen erfordern abermals Fachpersonal, d.h. einen Programmierer, das bzw. der unter anderem die zuvor genannten Fachkenntnisse aufweisen muss im Hinblick auf die Maschinensteuerungseinheit der Schweißvorrichtung, mittels derer das Schweißprogramm auf der Schweißvorrichtung ausführbar sein soll. Dies kann zum einen dahingehend problematisch sein, dass die zuvor genannte aufwendige und zeitintensive Programmierung erneut erfolgen muss, und zum anderen, dass dafür erforderliche spezifische Informationen der Maschinensteuerungseinheit der Schweißvorrichtung nicht frei zugänglich sind und dies in der Regel herstellerseitig auch nicht gewünscht ist.

Darüber hinaus sind Schweißprogramme üblicherweise an die Maschinensteuerungseinheit der Schweißvorrichtung besonders angepasst und optimiert. Es ist daher auch eine Herausforderung, dass sich ein mittels eines Computersystems generiertes, insbesondere codiertes, Schweißprogramm bei einer Ausführung mittels der Maschinensteuerungseinheit schweißtechnisch nicht anders verhält als geplant und/oder ausgelegt.

Aufgabe der vorliegenden Erfindung ist es daher, ein System und ein Verfahren zum Generieren eines Schweißprogramms für eine Schweißvorrichtung bereitzustellen, mit denen ein Schweißprogramm auf einfachere Weise generierbar ist.

Diese Aufgabe wird erfindungsgemäß gelöst durch ein System zum Generieren eines Schweißprogramms für eine Schweißvorrichtung, die eine Steuerungseinheit umfasst, gemäß Anspruch 1 sowie durch ein Verfahren zum Generieren eines Schweißprogramms für eine Schweißvorrichtung, die eine Steuerungseinheit umfasst, gemäß Anspruch 13. Vorteilhafte Weiterbildungen der Erfindung sind in den abhängigen Ansprüchen beschrieben.

Demnach weist ein erfindungsgemäßes System zum Generieren eines Schweißprogramms für eine Schweißvorrichtung, die eine Steuerungseinheit umfasst, auf: eine Eingabeeinheit zum Empfangen von Informationen, die einen Verlauf eines auf der Schweißvorrichtung durchführbaren Schweißprozesses definieren, von einem Benutzer, eine Entwicklungseinheit, die ausgebildet und programmiert ist, um mindestens eine Datei, die auf die Schweißvorrichtung übermittelbar ist und auf Basis derer das Schweißprogramm auf der Schweißvorrichtung mittels der Steuerungseinheit ausführbar ist (gewissermaßen kann die mindestens eine Datei beispielsweise das Schweißprogramm ausbilden), zu generieren basierend auf den Informationen, eine Simulationseinheit, die ausgebildet und programmiert ist, um zu der Steuerungseinheit der Schweißvorrichtung, für welche das Schweißprogramm generierbar ist mittels der Entwicklungseinheit, rechnerisch korrespondierend nachgebildet zu sein hinsichtlich einer funktionalen Äquivalenz oder einer funktionalen Identität, und die ferner ausgebildet und programmiert ist, um das Schweißprogramm, das auf Basis der mindestens einen Datei auf der Schweißvorrichtung mittels der Steuerungseinheit ausführbar ist, funktional äquivalent oder funktional identisch zu der Steuerungseinheit zu simulieren basierend auf der mindestens einen Datei, um ein dazu korrespondierendes Simulationsergebnis zu generieren, und eine Ausgabeeinheit zum Bereitstellen des von der Simulationseinheit generierten (beispielsweise generierbaren) Simulationsergebnisses an den Benutzer.

Mittels des erfindungsgemäßen Systems kann ein Schweißprogramm auf eine einfache und effiziente Weise generiert werden. Der Benutzer des Systems muss hier lediglich die Informationen der Eingabeeinheit übermitteln, so dass die Entwicklungseinheit auf Basis dieser Informationen die mindestens eine Datei generieren kann, mittels der dann das Schweißprogramm auf der Schweißvorrichtung ausführbar ist. Eine zeilenweise Codierung seitens des Benutzers kann dadurch vermieden werden. Das Erfordernis spezifischer Fachkenntnisse insbesondere über die (Maschinen-)Steuerungseinheit der Schweißvorrichtung kann dadurch (im Idealfall komplett) entfallen. Mittels der Simulation des Schweißprogramms durch die Simulationseinheit ist zudem ein gewünschter Schweißbetrieb und/oder ein Verhalten des Schweißprogramms beim praktischen Schweißen simulierbar, insbesondere rechnerisch nachvollziehbar, wodurch mögliche Fehler des Schweißprogramms einfach identifizierbar sein können und/oder mögliche Schweißablaufalternativen und/oder Schweißsonderfälle einfach und/oder kosteneffizient erprobbar sein können bzw. getestet werden können. Änderungen am Schweißprogramm können auf einfache Weise und leicht evaluierbar vorgenommen werden. Im Vergleich zu einem konventionellen Vorgehen, bei dem die Wirkung eines Schweißprogramms erst beim praktischen Schweißen erfolgen kann, ist dadurch insbesondere ein geringerer Aufwand im Hinblick auf Personal und/oder Zeit erzielbar. Ferner, da die Simulationseinheit ausgebildet und programmiert ist, um zu der Steuerungseinheit der Schweißvorrichtung rechnerisch korrespondierend nachgebildet zu sein hinsichtlich einer funktionalen Äquivalenz oder einer funktionalen Identität, ist eine Simulation mit einem hohen bzw. einem höheren Grad an Wirklichkeitstreue bzw. Realitätsnähe in Bezug auf die Steuerungseinheit der Schweißvorrichtung realisierbar, für welche das Schweißprogramm generierbar ist. Die rechnerisch korrespondierende Nachbildung hinsichtlich der funktionalen Äquivalenz oder der funktionalen Identität kann beispielsweise dahingehend von Bedeutung sein, Unterschiede eines Prozessors des Systems (d.h. eines Prozessors, auf den die Simulationseinheit für die Simulation zugreifen kann) und eines Prozessors der Steuerungseinheit der Schweißvorrichtung kompensieren zu können, da die Compiler aus einem Quellcode (beispielsweise einem Quellcode des Schweißprogramms) für die verschiedenartigen Prozessoren einen unterschiedlichen Maschinencode generieren. Denkbar ist zum Beispiel unterschiedlicher Maschinencode aufgrund von einer unterschiedlichen Rechnerarchitektur der Simulationseinheit und der Steuerungseinheit, aber ansonsten gleicher Funktionsweise. Durch die rechnerisch korrespondierende Nachbildung hinsichtlich der funktionalen Äquivalenz oder der funktionalen Identität ist es beispielsweise möglich, Unterschiede einer Prozessorarchitektur, die in dem System verwendet wird, und einer Prozessorarchitektur der Steuerungseinheit der Schweißvorrichtung (beispielsweise 64-vs. 32-Bit-Architektur) zu kompensieren, wodurch wirklichkeitsgetreuere bzw. realitätsnähere Kalkulationsergebnisse insbesondere im Nachkommabereich erzielbar sind.

Eine funktionale Äquivalenz oder funktionale Identität der Simulationseinheit und der Steuerungseinheit kann beispielsweise dadurch erzielt werden, dass identischer Quellcode oder zumindest identische Quellcodebestandteile (zum Beispiel codiert in C oder C++) für die Ausbildung der Simulationseinheit und der Steuerungseinheit zum Einsatz kommt/kommen.

Bei dem Benutzer kann es sich insbesondere um eine natürliche Person handeln. Die Erfindung ist jedoch nicht hierauf beschränkt. Der Benutzer kann allgemein als Operator angesehen werden, der menschlich und/oder maschinell ausgestaltet ist. Zum Beispiel ist eine Datenverarbeitungsvorrichtung als Benutzer mit der Funktion einer Mensch-Maschine-Schnittstelle und/oder als Fernbedienung vorgesehen. Die Datenverarbeitungsvorrichtung kann zum Beispiel mit künstlicher Intelligenz ausgestaltet sein und Funktionen einer menschlichen Bedienperson übernehmen.

Vorgesehen sein kann, dass das System eine Eingabevorrichtung, insbesondere umfassend eine Tastatur, aufweist, mittels derer die Informationen von dem Benutzer eingebbar sind und (beispielsweise unmittelbar) anschließend von der Eingabeeinheit empfangbar sind.

Die Eingabevorrichtung kann alternativ oder ergänzend zur Tastatur andersartige Eingabegeräte aufweisen, zum Beispiel eine Computermaus o.ä. Auch eine Spracheingabe durch den Benutzer ist denkbar.

Die Ausgabeeinheit kann konfiguriert sein, um das Simulationsergebnis dem Benutzer grafisch bereitzustellen, insbesondere in Form einer Bilddarstellung, insbesondere eines Diagramms von mindestens einer Schweißprozessvariablen abhängig von der Zeit, und/oder in Form eines Simulationsberichts. Die grafische Darstellung erlaubt es, das Simulationsergebnis dem Benutzer auf eine klare und eindeutige Weise zu präsentieren. Dies kann den Benutzer in die Lage versetzen, das ihm auf diese Weise bereitgestellte Simulationsergebnis mit im Vorfeld der Schweißprogramm-Generierung erstellten Planungs- und Auslegungsunterlagen, insbesondere händischen Skizzen, zu vergleichen, ob mittels des generierten Schweißprogramms ein geplantes Verhalten der Schweißvorrichtung bzw. ein geplanter Schweißbetrieb im Rahmen der Simulation erzielt wurde bzw. erzielbar ist. Mögliche Fehler, die während eines Schweißbetriebs auftreten können, sind dadurch einfacher identifizierbar und können beispielsweise einzelnen Schweißphasen auf einfachere Weise zugeordnet werden.

Ferner kann vorgesehen sein, dass die Ausgabeeinheit eine Bildanzeige und/oder eine Drucker-Vorrichtung aufweist, um das Simulationsergebnis dem Benutzer grafisch bereitzustellen.

Die Eingabeeinheit kann ausgebildet und programmiert sein, um eine vorbestimmte Bedienoberfläche, insbesondere in Form einer Matrix-Struktur oder einer Tabellen-Struktur, aufzuweisen und die Informationen in der vorbestimmten Bedienoberfläche zu entgegenzunehmen. Durch die vorbestimmte Bedienoberfläche, insbesondere in Form einer Matrix-Struktur oder einer Tabellen-Struktur, wird eine Möglichkeit zur Eingabe von Informationen geschaffen, die für den Benutzer übersichtlich, leicht verständlich und intuitiv bedienbar ist. Ferner kann eine Matrix-Struktur oder einer Tabellen-Struktur eine Datenverarbeitung erleichtern, wobei die Matrix-Struktur und/oder die Tabellen-Struktur ausgebildet und programmiert sein können, um einen Zugriff auf die entgegengenommenen Informationen zu ermöglichen. Dies kann zum Beispiel über eine Referenzierung bzw. einen Verweis erfolgen, insbesondere über eine Referenzierung bzw. einen Verweises auf eine Position (beispielsweise eine Speicherposition) in der Matrix-Struktur oder der Tabellen-Struktur. Das bedeutet zum Beispiel, dass im Bedarfsfall eine Änderung der Informationen nur in der Matrix-Struktur oder der Tabellen-Struktur erfolgen muss und nicht in jeder Kalkulation beispielsweise der Entwicklungseinheit, zum Beispiel für die Generierung der mindestens einen Datei und/oder der Simulationseinheit, zum Beispiel für die Simulation. Es kann vorgesehen sein, dass die Ausgabeeinheit konfiguriert ist, um die vorbestimmte Bedienoberfläche dem Benutzer bereitzustellen. Ferner kann vorzugsweise vorgesehen sein, dass die Ausgabeeinheit eine insbesondere ansteuerbare Bildanzeige aufweist, über die dem Benutzer die vorbestimmte Bedienoberfläche bereitgestellt werden kann.

Die Informationen können zumindest eines der Folgenden aufweisen: mindestens eine Schweißprozessvariable, mindestens eine Zeitreihe von mindestens einer Schweißprozessvariablen, mindestens einen Extremwert - beispielsweise mindestens ein Maximum, mindestens ein Minimum, oder mindestens einen Grenzwert - einer Schweißprozessvariablen und/oder mindestens einen Gradienten einer Schweißprozessvariablen.

Ferner kann vorgesehen sein, dass eine Schweißprozessvariable eines der Folgenden aufweist: eine Zeit (beispielsweise eine Zeitdauer, beispielsweise eine Zeitauflösung, beispielsweise eine Zyklus-Wiederholzeit), eine elektrische Spannung (beispielsweise eine Schweißspannung), einen elektrischen Strom (beispielsweise einen Schweißstrom), eine Frequenz (beispielsweise eine Pulsfrequenz), und/oder einen Drahtvorschub (beispielsweise eine Drahtvorschubgeschwindigkeit).

Alternativ oder ergänzend kann vorgesehen sein, dass der Typ der Schweißprozessvariablen durch den Benutzer wählbar ist, beispielsweise frei und/oder auf Basis einer vorbestimmten Auswahl, die in dem System, insbesondere der Eingabeeinheit und/oder einer Speichereinheit des Systems, hinterlegt, insbesondere gespeichert, ist. Ferner kann es vorgesehen sein, dass eine Schweißprozessvariable zeitabhängig und/oder ereignisabhängig ist. Ein Ereignis kann beispielsweise ein Kurzschluss (beispielsweise ein Lichtbogenkurzschluss) oder eine Betätigung eines Bedienelementes an der Schweißvorrichtung sein. Ferner kann vorgesehen sein, dass eine Schweißprozessvariable in Bezug auf einen Schweißprozess und/oder eine Schweißvorrichtung eine interne Variable (d.h. herrührend von dem Schweißprozess selbst und/oder der Schweißvorrichtung selbst) ist oder eine externe Variable ist, die außerhalb der Schweißvorrichtung ihren Ursprung hat, zum Beispiel ein Luftfeuchtigkeitswert.

Das System kann ferner eine Prüfeinheit aufweisen, die ausgebildet und programmiert ist, um das Simulationsergebnis, insbesondere hinsichtlich einer Plausibilität und/oder einer Geeignetheit für einen Schweißbetrieb in der Schweißvorrichtung, zu evaluieren und um ein korrespondierendes Evaluierungsergebnis zu generieren. Ferner kann vorgesehen sein, dass das Evaluierungsergebnis ein positives und/oder ein negatives Evaluierungsergebnis aufweist. Mittels der Prüfeinheit kann die Zuverlässigkeit des Systems insbesondere im Hinblick auf die Generierung von Schweißprogrammen und deren Simulation weiter erhöht werden, und/oder mögliche Fehlinterpretationen des Simulationsergebnisses durch den Benutzer können vermieden und/oder reduziert werden. Es kann zudem vorgesehen sein, dass die Prüfeinheit ferner ausgebildet und programmiert ist, um eine Evaluierung des Simulationsergebnisses automatisch und/oder in Antwort auf eine Aktivierung durch den Benutzer über die Eingabeeinheit und/oder die Eingabevorrichtung durchzuführen.

Das System kann eine Speichereinheit aufweisen, in der ein Musterdatensatz gespeichert ist, der zumindest eines der Folgenden aufweist: mindestens eine Schweißprozessvariable, mindestens eine Zeitreihe von mindestens einer Schweißprozessvariablen, mindestens einen Extremwert - beispielsweise mindestens ein Maximum, mindestens ein Minimum, oder mindestens einen Grenzwert - einer Schweißprozessvariablen und/oder mindestens einen Gradienten einer Schweißprozessvariablen, und wobei die Prüfeinheit ferner ausgebildet und programmiert sein kann, um auf den Musterdatensatz zuzugreifen und anhand des Musterdatensatzes das Simulationsergebnis zu evaluieren. Die Daten, die in dem Musterdatensatz gespeichert sein können, können die Informationen und/oder Abwandlungen der Informationen sein, die zuvor beschrieben wurden. Durch eine Evaluierung des Simulationsergebnisses anhand des Musterdatensatzes kann die Zuverlässigkeit des Systems weiter erhöht werden. Es kann ferner vorgesehen sein, dass der Musterdatensatz ausgebildet und programmiert ist, um ein erweiterbarer Musterdatensatz zu sein, in dem Informationen von bereits simulierten Schweißprogrammen speicherbar sind. Dadurch kann die Zuverlässigkeit der Evaluierung des Simulationsergebnisses durch die Prüfeinheit kontinuierlich verbessert werden, da die Evaluierung auf Basis von immer mehr Vergleichsinformationen, die in dem Musterdatensatz speicherbar sind/gespeichert sind, erfolgen kann.

Das System kann ferner eine Kommunikationsschnittstelle aufweisen, die mit der Schweißvorrichtung über ein portables Speichermedium (beispielsweise einen USB-Stick), kabellos und/oder kabelgebunden verbindbar ist für einen Datenaustausch, und mittels derer die mindestens eine Datei auf die Schweißvorrichtung über das portable Speichermedium, kabellos und/oder kabelgebunden übermittelbar ist, wenn die Kommunikationsschnittstelle mit der Schweißvorrichtung zum Datenaustausch verbunden ist. Es kann ferner vorgesehen sein, dass die Kommunikationsschnittstelle mit der Schweißvorrichtung kabellos und/oder kabelgebunden verbindbar ist in einer direkten Weise und/oder einer indirekten Weise. Bei einer indirekten Weise kann beispielsweise eine Vermittlungseinrichtung, beispielsweise ein Server und/oder ein Rechnernetz zwischen das System und die Schweißvorrichtung geschaltet sein, über welche der Datenaustausch erfolgt. Diese Vermittlungseinrichtung kann Teil des Systems sein oder nicht.

Die mindestens eine Datei kann, beispielsweise zum Zwecke einer sicheren und/oder effizienten Übertragung an die Schweißvorrichtung und/oder an einen Server Gegenstand einer Manipulation sein, die beispielsweise mindestens eines der Folgenden umfasst: Verschlüsselung, Entschlüsselung, Komprimierung, Dekomprimierung, Ergänzung beispielsweise mit Metadaten. Bei der Manipulation wird indessen die Definition des eigentlichen Schweißprogramms in der mindestens einen Datei nicht verändert. Auch die Verwaltung der mindestens einen Datei vom System, der Schweißvorrichtung und/oder vom Server kann eine Manipulation erfordern.

Die Entwicklungseinheit kann ferner ausgebildet und programmiert sein, um die mindestens eine Datei mit einer von der Steuerungseinheit der Schweißvorrichtung interpretierbaren Nutzungsdauer-Funktion zu versehen, so dass das Schweißprogramm nur für eine vorbestimmte Nutzungsdauer auf der Schweißvorrichtung ausführbar ist. Durch die Nutzungsdauer-Funktion kann ein zuverlässiger und/oder ein sicherer Schweißbetrieb gewährleistet werden, da diese einen Betreiber der Schweißvorrichtung veranlassen kann (indem das Schweißprogramm nicht mehr ausführbar ist), eine Kontrolle der Schweißvorrichtung vornehmen zu müssen, um zum Beispiel eine Überprüfung durch den Hersteller des Schweißgerätes einzuholen und/oder Wartungsintervalle zwingend einzuhalten.

Die vorbestimmte Nutzungsdauer kann auf unterschiedliche Weise bestimmt werden. Beispielsweise ist die Nutzungsdauer bis zu einem bestimmten Termin möglich, zum Beispiel einem kalendarischen Datum, bis zu dem das Schweißprogramm von der Schweißvorrichtung ausführbar ist. Alternativ kann zum Beispiel vorgesehen sein, dass das Schweißprogramm für eine bestimmte Zeitdauer ausführbar ist, für die die Schweißvorrichtung mit dem Schweißprogramm betrieben werden kann - zum Beispiel für eine bestimmte Anzahl von Stunden und/oder Minuten unabhängig von einem kalendarischen Datum.

Die Entwicklungseinheit kann ferner ausgebildet und programmiert sein, um die mindestens eine Datei mit einer von der Steuerungseinheit der Schweißvorrichtung interpretierbaren Freigabe-Funktion zu versehen, so dass die Nutzungsdauer nach Ablauf der vorbestimmten verlängerbar ist und das Schweißprogramm auf der Schweißvorrichtung weiterhin ausführbar ist. Mittels der Freigabe-Funktion kann ermöglicht werden, das Schweißprogramm nach Ablauf der Nutzungsdauer wieder zu aktivieren, beispielsweise nach der zuvor genannten Überprüfung und/oder Wartung.

Das System kann ferner einen Server aufweisen, mittels dem die mindestens eine Datei von der Entwicklungseinheit an die Simulationseinheit übermittelbar ist und mittels dem das Simulationsergebnis von der Simulationseinheit an die Ausgabeeinheit übermittelbar ist. Der Server muss nicht zwingend Teil des Systems sein. Der Server kann auch nicht Teil des Systems sein, sondern als eine Vermittlungseinrichtung konfiguriert sein, um die mindestens eine Datei an die Simulationseinheit übermitteln zu können und um das Simulationsergebnis an die Ausgabeeinheit übermitteln zu können. Mittels des Servers kann die Simulationseinheit gesondert, etwa räumlich getrennt, von den anderen Komponenten des Systems (insbesondere der Eingabeeinheit, der Entwicklungseinheit und/oder der Ausgabeeinheit) ausgebildet sein, insbesondere auf dem Server selbst oder an einem Ort, der sich von dem Ort der anderen Komponenten des Systems unterscheiden kann.

Alternativ oder ergänzend zum Server kann das System beispielsweise auch ein Rechnernetz oder eine Cloud aufweisen und/oder mit einem von diesen verbindbar sein, so dass mittels einem von diesen die mindestens eine Datei von der Entwicklungseinheit an die Simulationseinheit übermittelbar ist und mittels dem das Simulationsergebnis von der Simulationseinheit an die Ausgabeeinheit übermittelbar ist.

Alternativ oder ergänzend kann vorgesehen sein, dass das System eine zusätzliche Simulationseinheit aufweist und das System außerdem einen Server und/oder eine wie zuvor beschriebene Alternative zu dem Server aufweisen kann und/oder mit einem solchen bzw. einer solchen verbindbar ist. Mittels des Servers / der Alternative zu dem Server kann die mindestens eine Datei von der Entwicklungseinheit an die zusätzliche Simulationseinheit übermittelbar sein und das Simulationsergebnis von der zusätzlichen Simulationseinheit an die Ausgabeeinheit übermittelbar sein. In diesem Fall kann die zusätzliche Simulationseinheit wie die Simulationseinheit ausgebildet und programmiert sein und das Simulationsergebnis kann sich aus dem Simulationsergebnis der Simulationseinheit und aus dem zusätzlichen Simulationsergebnis der zusätzlichen Simulationseinheit zusammensetzen.

Die Eingabeeinheit kann als Teil der Entwicklungseinheit ausgebildet sein, oder die Entwicklungseinheit kann als Teil der Eingabeeinheit ausgebildet sein, oder die Eingabeeinheit und die Entwicklungseinheit können separat voneinander ausgebildet sein. Ferner kann vorgesehen sein, dass die Simulationseinheit separat von der Eingabeeinheit und der Entwicklungseinheit ausgebildet ist oder dass die Simulationseinheit als Teil einer zuvor genannten Kombination der Eingabeeinheit und der Entwicklungseinheit ausgebildet ist.

Ferner kann vorgesehen sein, dass das gesamte System zumindest teilweise zentral oder zumindest teilweise räumlich verteilt organisiert ist. Das System kann ein Computersystem aufweisen, das zumindest einen Prozessor und zumindest eine Speichereinrichtung umfasst und auf welchem mindestens eine von der Eingabeeinheit, der Entwicklungseinheit, der Simulationseinheit, der Prüfungseinheit oder irgendeine Kombination davon ausgebildet ist (beispielsweise aber auch alle). Ferner kann auch vorgesehen sein, dass die Eingabeeinheit, die Entwicklungseinheit, die Simulationseinheit, die Prüfungseinheit und/oder irgendeine Kombination davon als mindestens ein (beispielsweise gespeichertes) Programm auf der Speichereinrichtung des Computersystems ausgebildet und programmiert ist (beispielsweise alle zusammen als ein einziges Programm, oder beispielsweise jedes jeweilig als ein gesondertes Programm). Die Speichereinrichtung kann die Speichereinheit sein.

Ferner kann vorgesehen sein, dass das Schweißprogramm mindestens ein Schweißprogrammmodul aufweist. Ein Schweißprogrammmodul kann allein oder zusammen mit mindestens einem weiteren Schweißprogrammmodul das Schweißprogramm bilden. Jedes Schweißprogrammmodul kann auf Basis von mindestens einer Datei auf der Schweißvorrichtung ausführbar sein. So kann zum Beispiel ein aus mehreren Schweißprogrammmodulen zusammengesetztes Schweißprogramm auf Basis von mehreren Dateien auf der Schweißvorrichtung ausführbar sein. Mehrere Schweißprogrammmodule können auch auf Basis von einer (beispielsweise einzigen) Datei auf der Schweißvorrichtung ausführbar sein (mittels der Steuerungseinheit).

Das System kann ferner eine Schweißvorrichtung aufweisen, die eine Steuerungseinheit und eine Schweißvorrichtung-Schnittstelle umfasst, wobei die Schweißvorrichtung-Schnittstelle konfiguriert ist, um die mindestens eine Datei entgegenzunehmen, und wobei die Steuerungseinheit konfiguriert ist, um auf Basis der mindestens einen Datei das Schweißprogramm auszuführen. Die Schnittstelle kann insbesondere eine Kommunikationsschnittstelle sein.

Nachfolgend wird das erfindungsgemäße Verfahren beschrieben. Alle strukturellen und funktionellen Merkmale, die mit dem zuvor beschriebenen erfindungsgemäßen System und seinen bevorzugten Ausführungsformen verbunden sind, können in dem erfindungsgemäßen Verfahren entweder allein oder in Kombination umgesetzt sein und die damit verbundenen Eigenschaften, Ausgestaltungen und Vorteile können entsprechend ebenfalls umfasst sowie erzielt werden. Zusätzlich kann das zuvor beschriebene System konfiguriert sein, um eines der nachstehenden Verfahren auszuführen.

Ein erfindungsgemäßes Verfahren zum Generieren eines Schweißprogramms für eine Schweißvorrichtung, die eine Steuerungseinheit umfasst, weist demnach auf: Empfangen von Informationen, die einen Verlauf eines auf der Schweißvorrichtung durchführbaren Schweißprozesses definieren, von einem Benutzer mittels einer Eingabeeinheit, Bereitstellen der Informationen an eine Entwicklungseinheit, Generieren von mindestens einer Datei, die auf die Schweißvorrichtung übermittelbar ist und auf Basis derer das Schweißprogramm auf der Schweißvorrichtung mittels der Steuerungseinheit ausführbar ist (gewissermaßen kann die mindestens eine Datei beispielsweise das Schweißprogramm ausbilden), basierend auf den Informationen mittels der Entwicklungseinheit, Bereitstellen der mindestens einen Datei an eine Simulationseinheit, Simulieren des Schweißprogramms, das auf Basis der mindestens einen Datei auf der Schweißvorrichtung mittels der Steuerungseinheit ausführbar ist, mittels der Simulationseinheit, wobei die Simulationseinheit ausgebildet und programmiert ist, um zu der Steuerungseinheit der Schweißvorrichtung rechnerisch korrespondierend nachgebildet zu sein hinsichtlich einer funktionalen Äquivalenz oder einer funktionalen Identität, und wobei das Simulieren funktional äquivalent oder funktional identisch zu der Steuerungseinheit erfolgt basierend auf der mindestens einen Datei, Generieren eines dazu korrespondierenden Simulationsergebnisses mittels der Simulationseinheit, Bereitstellen des Simulationsergebnisses für eine Ausgabeeinheit, und Bereitstellen des von der Simulationseinheit generierten Simulationsergebnisses an den Benutzer mittels der Ausgabeeinheit.

Ferner kann vorgesehen sein, dass das Empfangen von Informationen von einem Benutzer mittels der Eingabeeinheit über eine Eingabevorrichtung, insbesondere umfassend eine Tastatur, erfolgt, mittels derer die Informationen von dem Benutzer eingebbar sind / eingegeben werden und (beispielsweise unmittelbar) anschließend von der Eingabeeinheit empfangbar sind / empfangen werden.

Das Bereitstellen des von der Simulationseinheit generierten Simulationsergebnisses an den Benutzer kann in grafischer Form erfolgen, insbesondere in Form einer Bilddarstellung, insbesondere eines Diagramms von mindestens einer Schweißprozessvariablen abhängig von der Zeit, und/oder in Form eines Simulationsberichts.

Beim Entgegennehmen von Informationen können die Informationen in einer vorbestimmten Bedienoberfläche der Eingabeeinheit, insbesondere in Form einer Matrix-Struktur oder einer Tabellen-Struktur, entgegengenommen werden.

Die Informationen können zumindest eines der Folgenden aufweisen: mindestens eine Schweißprozessvariable, mindestens eine Zeitreihe von mindestens einer Schweißprozessvariablen, mindestens einen Extremwert - beispielsweise mindestens ein Maximum, mindestens ein Minimum, oder mindestens einen Grenzwert - einer Schweißprozessvariablen und/oder mindestens einen Gradienten einer Schweißprozessvariablen.

Das Verfahren kann ferner aufweisen: Bereitstellen des Simulationsergebnisses an den Benutzer mittels der Ausgabeeinheit, Evaluieren des Simulationsergebnisses, insbesondere hinsichtlich einer Plausibilität und/oder einer Geeignetheit für einen Schweißbetrieb in der Schweißvorrichtung, durch den Benutzer, und Freigeben oder Nicht-Freigeben des Simulationsergebnisses durch den Benutzer, wobei die Freigabe und die Nicht-Freigabe durch den Benutzer jeweilig ein voneinander unterschiedliches Evaluierungsergebnis definieren. Beispielsweise ist das Evaluierungsergebnis bei dem Freigeben positiv und bei dem Nicht-Freigeben negativ.

Das Verfahren kann ferner aufweisen: Bereitstellen des Simulationsergebnisses an eine Prüfeinheit, Evaluieren des Simulationsergebnisses, insbesondere hinsichtlich einer Plausibilität und/oder einer Geeignetheit für einen Schweißbetrieb in der Schweißvorrichtung, mittels der Prüfeinheit, und Generieren eines korrespondierenden Evaluierungsergebnisses.

Das Evaluieren des Simulationsergebnisses kann den Schritt des Vergleichens des Simulationsergebnisses mit einem Musterdatensatz aufweisen, der in einer Speichereinheit gespeichert ist und der zumindest eines der Folgenden aufweist: mindestens eine Schweißprozessvariable, mindestens eine Zeitreihe von mindestens einer Schweißprozessvariablen, mindestens einen Extremwert - beispielsweise mindestens ein Maximum, mindestens ein Minimum, oder mindestens einen Grenzwert - einer Schweißprozessvariablen und/oder mindestens einen Gradienten einer Schweißprozessvariablen.

Das Verfahren kann ferner aufweisen: Bereitstellen der mindestens einen Datei an eine Kommunikationsschnittstelle, die mit der Schweißvorrichtung über ein portables Speichermedium (beispielsweise einen USB-Stick), kabellos und/oder kabelgebunden verbindbar ist für einen Datenaustausch und mittels derer die mindestens eine Datei auf die Schweißvorrichtung über das portable Speichermedium, kabellos und/oder kabelgebunden übermittelbar ist, wenn die Kommunikationsschnittstelle mit der Schweißvorrichtung zum Datenaustausch verbunden ist, Verbinden der Kommunikationsschnittstelle mit der Schweißvorrichtung, um die mindestens eine Datei an die Schweißvorrichtung zu übermitteln, und Übermitteln der mindestens einen Datei an die Schweißvorrichtung mittels der Kommunikationsschnittstelle.

Das Bereitstellen der mindestens einen Datei an die Kommunikationsschnittstelle, das Verbinden der Kommunikationsschnittstelle mit der Schweißvorrichtung und das Übermitteln der mindestens einen Datei an die Schweißvorrichtung kann beispielsweise nur erfolgen, wenn ein vorbestimmtes Evaluierungsergebnis vorliegt, zum Beispiel ein positives Evaluierungsergebnis.

Das Generieren der mindestens einen Datei kann ferner aufweisen: Integrieren einer von der Steuerungseinheit der Schweißvorrichtung interpretierbaren Nutzungsdauer-Funktion in der mindestens einen Datei, so dass das Schweißprogramm nur für eine vorbestimmte Nutzungsdauer auf der Schweißvorrichtung ausführbar ist.

Das Generieren der mindestens einen Datei kann ferner aufweisen: Integrieren einer von der Steuerungseinheit der Schweißvorrichtung interpretierbaren Freigabe-Funktion in der mindestens einen Datei, so dass nach Ablauf der vorbestimmten Nutzungsdauer diese verlängerbar ist und das Schweißprogramm auf der Schweißvorrichtung weiterhin ausführbar ist.

Das Bereitstellen der mindestens einen Datei an die Simulationseinheit und das Bereitstellen des Simulationsergebnisses an die Ausgabeeinheit können jeweilig mittels eines Servers erfolgen.

Die Schweißvorrichtung kann jegliche Art Lichtbogen- und/oder Widerstands-Schweißvorrichtung sein, z.B. eine MIG-, MAG, WIG-, Elektroden- und/oder Heißdraht-Schweißvorrichtung. Die Schweißvorrichtung kann handgeführt und/oder handbetätigt und/oder mechanisiert und/oder robotisch ausgestaltet sein.

Erfindungsgemäß ist ferner ein Computerprogrammprodukt, das Befehle aufweist, die bei der Ausführung des Computerprogrammprodukts durch ein zuvor beschriebenes System dieses veranlassen, ein Verfahren der vorstehend beschriebenen Art auszuführen.

Erfindungsgemäß ist auch ein computerlesbares Speichermedium, auf dem ein zuvor beschriebenes Computerprogrammprodukt gespeichert ist.

Die nachfolgende Beschreibung vorteilhafter Ausführungsformen der Erfindung dient im Zusammenhang mit der Zeichnung der weiteren näheren Erläuterung der Erfindung. Es zeigen:
- Figur 1:: ein System zum Generieren eines Schweißprogramms für eine Schweißvorrichtung, die eine Steuerungseinheit umfasst, gemäß einer bevorzugten Ausführungsform der Erfindung;
- Figur 2:: das in Fig. 1 dargestellte System zusammen mit einer Schweißvorrichtung;
- Figur 3:: ein System zum Generieren eines Schweißprogramms für eine Schweißvorrichtung, die eine Steuerungseinheit umfasst, gemäß einer weiteren bevorzugten Ausführungsform der Erfindung;
- Figur 4:: ein System zum Generieren eines Schweißprogramms für eine Schweißvorrichtung, die eine Steuerungseinheit umfasst, gemäß einer weiteren bevorzugten Ausführungsform der Erfindung;
- Figur 5:: eine vorbestimmte Bedienoberfläche einer Eingabeeinheit eines Systems zum Generieren eines Schweißprogramms für eine Schweißvorrichtung, die eine Steuerungseinheit umfasst, gemäß einer weiteren bevorzugten Ausführungsform der Erfindung;
- Figur 6:: ein Simulationsergebnis in grafischer Form, das bereitgestellt ist mittels einer Ausgabeeinheit eines Systems zum Generieren eines Schweißprogramms für eine Schweißvorrichtung, die eine Steuerungseinheit umfasst, gemäß einer weiteren beispielhaften Ausführungsform der Erfindung; und
- Figur 7:: ein Verfahren zum Generieren eines Schweißprogramms für eine Schweißvorrichtung, die eine Steuerungseinheit umfasst, gemäß einer beispielhaften Ausführungsform der Erfindung.

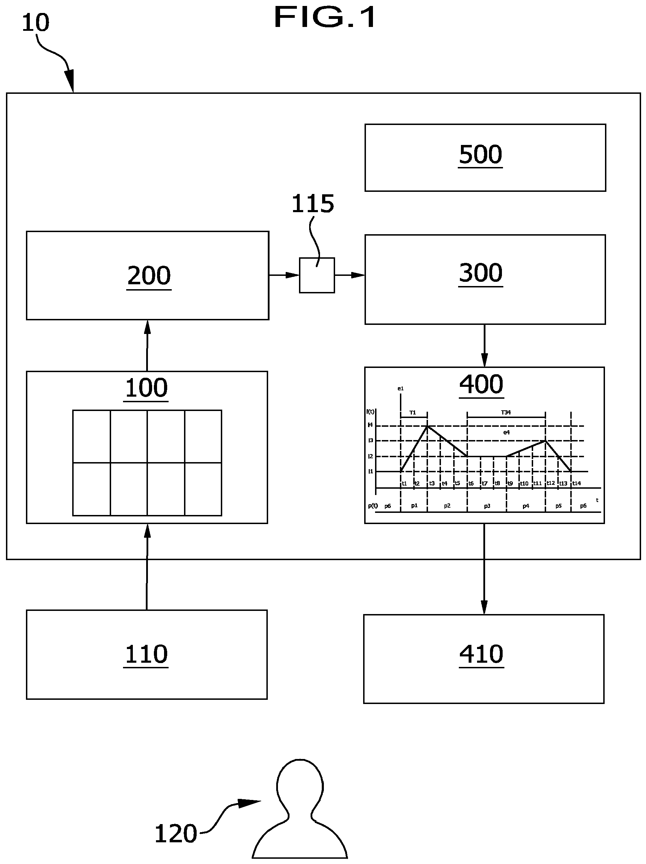

Bezugnehmend auf die Figuren 1 bis 4 weist ein insgesamt mit dem Bezugszeichen 10 gekennzeichnetes System zum Generieren eines Schweißprogramms für eine Schweißvorrichtung 20, die eine Steuerungseinheit 22 umfasst, auf: eine Eingabevorrichtung 110, insbesondere umfassend eine Tastatur, zum Eingeben von Informationen durch einen Benutzer 120, eine Eingabeeinheit 100 zum Empfangen der Informationen von dem Benutzer 120 über die Eingabevorrichtung 110, eine Entwicklungseinheit 200 zum Generieren des Schweißprogramms, eine Simulationseinheit 300 zum Simulieren des Schweißprogramms, eine Ausgabeeinheit 400 zum Bereitstellen eines von der Simulationseinheit 300 generierten Simulationsergebnisses an den Benutzer 120, und eine Kommunikationsschnittstelle 500 zum Übermitteln des Schweißprogramms an die Schweißvorrichtung 20.

Im vorliegenden Ausführungsbeispiel handelt es sich beim Benutzer 120 um eine natürliche Person. Wie bereits erwähnt kann der Benutzer 120 insgesamt als Operator angesehen werden, der menschlich und/oder maschinell ausgestaltet sein kann. Zum Beispiel ist als Benutzer eine Datenverarbeitungsvorrichtung vorgesehen, die Eingaben einer (menschlichen) Bedienperson im Sinne eine Mensch-Maschine-Schnittstelle entgegennimmt und/oder als Fernbedienung wirkt. Die Datenverarbeitungseinrichtung kann beispielsweise mit künstlicher Intelligenz ausgestaltet sein und Funktionen einer menschlichen Bedienperson übernehmen.

Die Ausgabeeinheit 400 weist eine vorzugsweise ansteuerbare Bildanzeige 410 auf, insbesondere in Form eines Displays, um das Simulationsergebnis dem Benutzer 120 grafisch bereitzustellen.

Die Eingabeeinheit 100 ist zudem ausgebildet und programmiert, um eine vorbestimmte Bedienoberfläche in Form einer Tabellen-Struktur zu haben (diese ist in den Figuren 1 bis 4 schematisch dargestellt).

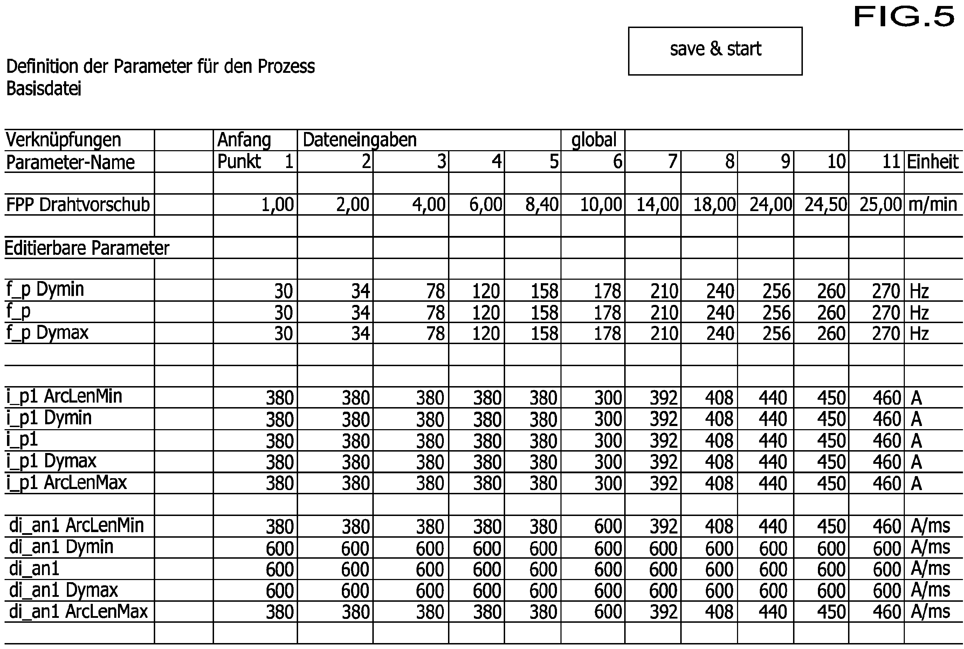

Die vorbestimmte Bedienoberfläche ist ausgebildet und programmiert, um die seitens des Benutzers 120 eingegebenen Informationen in der Tabellen-Struktur zu empfangen. Eine solche Tabellen-Struktur ist ferner auch in Fig. 5 beispielhaft dargestellt, wobei Beispiele für Werte von Schweißprozessvariablen gezeigt sind.

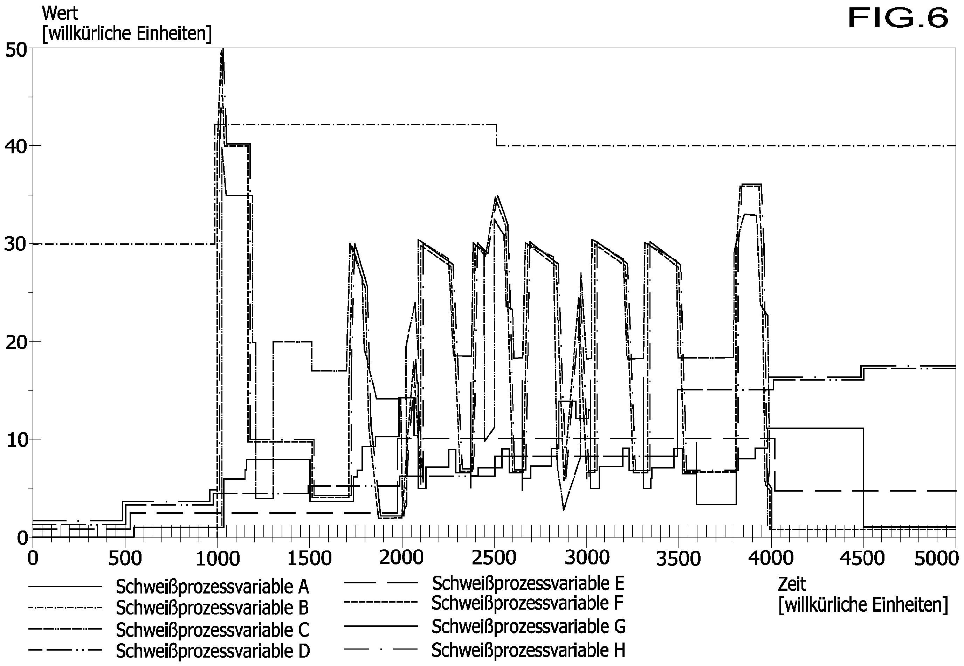

Die Informationen, die von dem Benutzer 120 eingebbar sind, definieren einen Verlauf eines auf der Schweißvorrichtung 20 durchführbaren Schweißprozesses. Hierbei weisen die Informationen zumindest eines der Folgenden auf: mindestens eine Schweißprozessvariable, mindestens eine Zeitreihe von mindestens einer Schweißprozessvariablen (vgl. Fig. 6), mindestens einen Extremwert einer Schweißprozessvariablen und/oder mindestens einen Gradienten einer Schweißprozessvariablen.

Die Entwicklungseinheit 200 ist ausgebildet und programmiert, um mindestens eine Datei 115 zu generieren, basierend auf den Informationen des Benutzers 120. Mit anderen Worten ist die Entwicklungseinheit 200 ausgebildet und programmiert, um das Schweißprogramm basierend auf den Informationen zu generieren.

Die mindestens eine Datei 115 bildet gewissermaßen das Schweißprogramm, wenn sie von einer Steuerungseinheit der Schweißvorrichtung 20 ausgeführt wird.

Die mindestens eine Datei 115 (bzw. das Schweißprogramm) ist auf die Schweißvorrichtung 20 übermittelbar und auf Basis dieser ist das Schweißprogramm auf der Schweißvorrichtung 20 mittels der Steuerungseinheit 22 ausführbar.

Die Entwicklungseinheit 200 ist ferner ausgebildet und programmiert ist, um die mindestens eine Datei 115 mit einer von der Steuerungseinheit 22 der Schweißvorrichtung 20 interpretierbaren Nutzungsdauer-Funktion und einer von der Steuerungseinheit 22 der Schweißvorrichtung 20 interpretierbaren Freigabe-Funktion zu versehen.

Die Nutzungsdauer-Funktion ist ausgebildet und programmiert, dass das Schweißprogramm nur für eine vorbestimmte Nutzungsdauer auf der Schweißvorrichtung 20 ausführbar ist. Hierbei kann die Nutzungsdauer durch einen Termin wie zum Beispiel ein kalendarisches Datum begrenzt sein oder durch eine vorgegebene Anzahl von Stunden und/oder Minuten, die das Schweißprogramm aktiv ausgeführt werden kann.

Die Freigabe-Funktion ist ausgebildet und programmiert, dass nach Ablauf der vorbestimmten Nutzungsdauer diese verlängerbar ist und das Schweißprogramm auf der Schweißvorrichtung 20 weiterhin ausführbar ist.

Die Simulationseinheit 300 ist ausgebildet und programmiert, um zu der Steuerungseinheit 22 der Schweißvorrichtung 20, für welche das Schweißprogramm generierbar ist mittels der Entwicklungseinheit 200, rechnerisch korrespondierend hinsichtlich einer funktionalen Äquivalenz oder einer funktionalen Identität nachgebildet zu sein. Zu diesem Zweck basieren die Simulationseinheit 300 und die Steuerungseinheit 22 zum Beispiel auf identischem Quellcode oder zumindest auf identischen Quellcodebestandteilen (beispielsweise codiert in C oder C++)

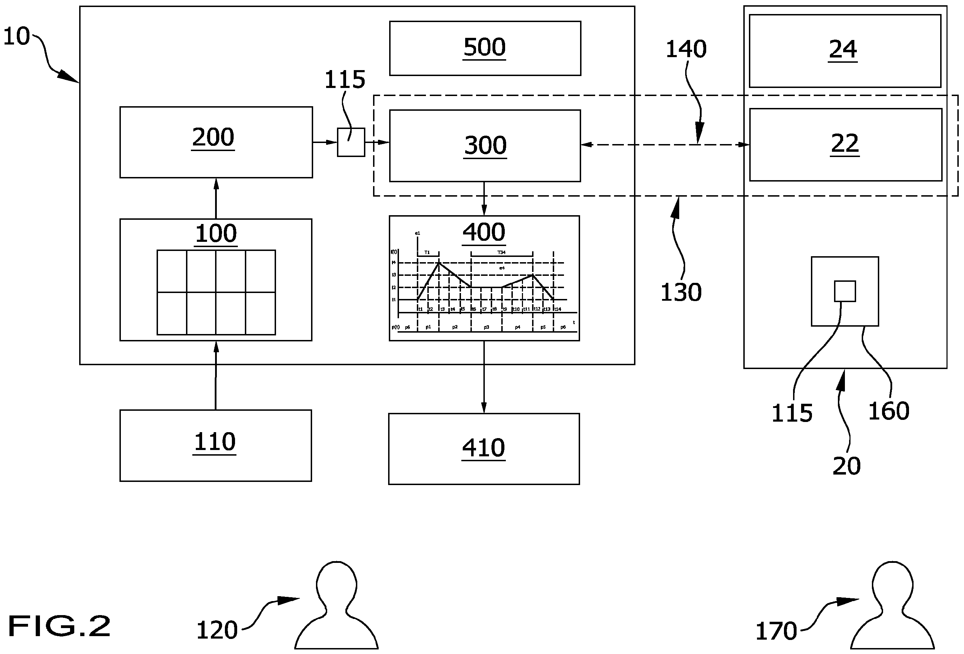

Der Zusammenhang der funktionalen Äquivalenz oder funktionalen Identität ist in Fig. 2 mittels der gestrichelten Linien 130 und des gestrichelten Pfeils 140 schematisch dargestellt.

Die Simulationseinheit 300 ist ferner ausgebildet und programmiert, um das Schweißprogramm, das auf Basis der mindestens einen Datei 115 auf der Schweißvorrichtung 20 mittels der Steuerungseinheit 22 ausführbar ist, funktional äquivalent oder funktional identisch zu der Steuerungseinheit 22 basierend auf der mindestens einen Datei 115 zu simulieren.

Die Simulationseinheit 300 ist ferner ausgebildet und programmiert, um ein zu der durchgeführten Simulation korrespondierendes Simulationsergebnis zu generieren, welches dann mittels der Bildanzeige 410 dem Benutzer 120 grafisch bereitstellbar ist.

Die grafische Bereitstellung erfolgt vorzugsweise als eine Bilddarstellung. Vorliegend handelt es sich bei dieser Bilddarstellung zum Beispiel um ein Diagramm von mindestens einer Schweißprozessvariablen. Die Figuren 1 bis 4 zeigen schematisch einen Schweißstrom abhängig von der Zeit. Alternativ oder ergänzend kann zusätzlich auch ein Simulationsbericht, insbesondere in Textform, bereitgestellt sein/werden. Eine solche Bilddarstellung in Form eines Diagramms von einer Schweißprozessvariablen abhängig von der Zeit ist ferner in Fig. 6 exemplarisch dargestellt, als Zeitdiagramm von vorliegend acht Schweißprozessvariablen.

Durch das derart bereitgestellte Simulationsergebnis kann der Benutzer 120 in die Lage versetzt werden, das Simulationsergebnis hinsichtlich einer Plausibilität und/oder einer Geeignetheit für einen Schweißbetrieb in der Schweißvorrichtung 20 zu evaluieren.

Kommt der Benutzer 120 zu einem positiven Evaluierungsergebnis, gibt der Benutzer 120 das Schweißprogramm frei. Kommt der Benutzer 120 zu einem negativen Evaluierungsergebnis, gibt der Benutzer 120 das Schweißprogramm nicht frei. Der Benutzer 120 hat insbesondere die Möglichkeit, die eingegebenen Informationen mittels der Eingabeeinheit 100 zu ändern, das Schweißprogramm auf einfache Weise zu verändern, um zu einem positiven Evaluierungsergebnis zu gelangen.

Liegt ein positives Evaluierungsergebnis vor, kann der Benutzer 120 die mindestens eine Datei 115/ das Schweißprogramm mittels der Kommunikationsschnittstelle 500 zu der Schweißvorrichtung 20 übermitteln.

Die Kommunikationsschnittstelle 500 ist konfiguriert, um mit der Schweißvorrichtung 20 kabellos und/oder kabelgebunden und/oder über ein portables Speichermedium, insbesondere einen USB-Stick, für einen Datenaustausch verbindbar zu sein, und um die mindestens eine Datei 115 auf die Schweißvorrichtung 20 über das portable Speichermedium, kabellos und/oder kabelgebunden zu übermitteln, wenn die Kommunikationsschnittstelle 500 mit der Schweißvorrichtung 20 zum Datenaustausch verbunden ist.

Wie in Fig. 2 gezeigt, weist die Schweißvorrichtung 20 für den Datenaustausch eine Schweißvorrichtung-Kommunikationsschnittstelle 24 auf, mit der die Kommunikationsschnittstelle 500 kabellos und/oder kabelgebunden und/oder über das portable Speichermedium, insbesondere den USB-Stick, verbindbar ist.

Wie in Fig. 2 schematisch dargestellt, ist die Schweißvorrichtung 20 vorliegend nicht Teil des Systems 10. Allerdings kann vorgesehen sein, dass das System 10 in einer weiteren bevorzugten Ausführungsform die Schweißvorrichtung 20 zusätzlich umfasst, die die Steuerungseinheit 22 und die Schweißvorrichtung-Kommunikationsschnittstelle 24 umfasst, wobei die Schweißvorrichtung-Kommunikationsschnittstelle 24 konfiguriert ist, um die mindestens eine Datei 115 / das Schweißprogramm von der Kommunikationsschnittstelle 500 entgegenzunehmen, und wobei die Steuerungseinheit 22 konfiguriert ist, um auf Basis der mindestens einen Datei 115 das Schweißprogramm auszuführen.

Zum Zwecke der Übertragung und/oder zur Verwaltung der mindestens einen Datei 115 kann wie erwähnt eine Manipulation, jedoch ohne Veränderung der Funktionsweise des Schweißprogramms, vorgesehen sein, beispielsweise Verschlüsselung, Entschlüsselung, Komprimierung, Dekomprimierung, Datenergänzung... Die Manipulation kann beispielsweise vom System 10, der Schweißvorrichtung 20 und/oder vom nachfolgend erwähnten Server 800 vorgenommen werden.

Nachdem die mindestens eine Datei 115 / das Schweißprogramm auf die Schweißvorrichtung 20 übermittelt wurde, ist diese nun auf der Grundlage des Schweißprogramms zu schweißen, welches auf Basis der mindestens einen Datei 115 von der Steuerungseinheit 22 ausführbar ist.

Figur 2 stellt darüber hinaus eine Speichereinrichtung 160 dar, in der die mindestens eine Datei 115 nach Übertragung auf die Schweißvorrichtung 20, insbesondere über die Kommunikationsschnittstelle 24, gespeichert ist. Die Steuerungseinheit 22 kann auf die mindestens eine Datei 115 zugreifen und darin enthaltene Befehle und damit das Schweißprogramm ausführen.

Datentechnisch sind die mindestens eine Datei 115, die von der Entwicklungseinheit 200 erzeugt wird, und die mindestens eine Datei 115 der Speichereinrichtung 160 insbesondere identisch.

Wie bereits erwähnt kann vorgesehen sein, dass die mindestens eine Datei 115 mit einer Nutzungsdauer-Funktion und einer Freigabe-Funktion versehen ist.

Vorgesehen sein kann beispielsweise, dass die mindestens eine Datei 115 und damit das Schweißprogramm von der Schweißvorrichtung 20 nur für eine vorbestimmte Nutzungsdauer ausgeführt werden kann, nach deren Ablauf eine Ausführung nicht mehr möglich ist.

Zur weiteren Ausführung des Schweißprogramms kann vorgesehen sein, dass eine Person 170 die Freigabe-Funktion der mindestens einen Datei 115 aktiviert, so dass das Schweißprogramm weiterhin von der Schweißvorrichtung 20 ausgeführt werden kann.

Die Person 170 ist beispielsweise Mitarbeiter eines Herstellers der Schweißvorrichtung 20 oder vom Hersteller autorisiert, insbesondere zertifiziert.

Der Person 170 kann die mindestens eine Datei 115 vom System 10 und/oder durch den Benutzer 120 zum Beispiel zur Überprüfung übermittelt werden (nicht dargestellt). Nach Überprüfung des Schweißprogramms durch die Person 170, die ihrerseits zum Beispiel ein zum System 10 korrespondierendes System 10 einsetzen kann und/oder eine zur Simulationseinheit 300 korrespondierende Simulationseinheit, kann die Person 170 das Schweißprogramm freigeben.

Denkbar ist zum Beispiel, dass die Person 170 eine Datenverbindung zur Schweißvorrichtung 20 aufbaut, zum Beispiel über die Schweißvorrichtung-Kommunikationsschnittstelle 24.

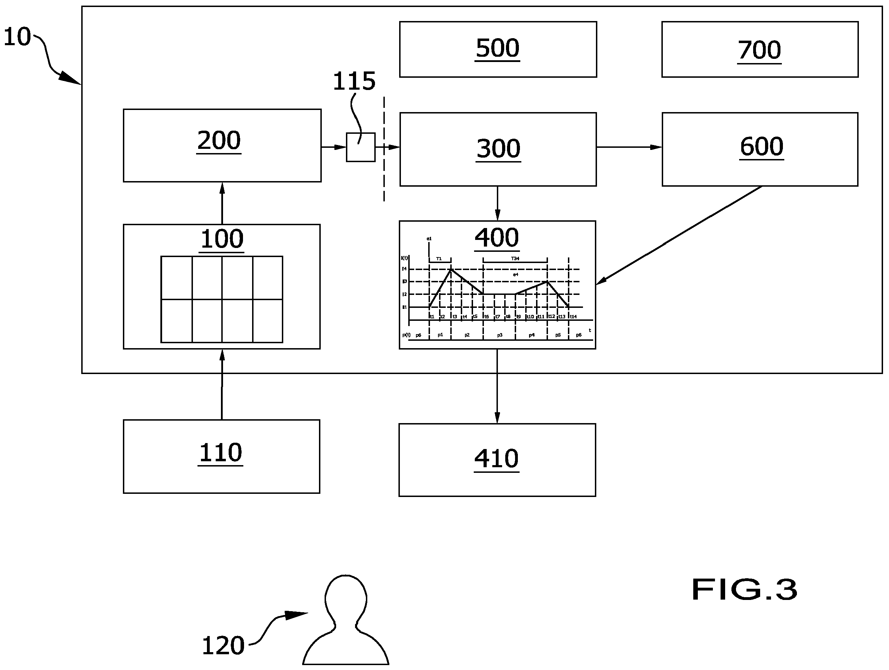

Bezugnehmend auf Fig. 3 weist das System 10 gemäß einer weiteren Ausführungsform ferner eine Prüfeinheit 600 und eine Speichereinheit 700 auf. Ansonsten ist das System 10 im Wesentlichen konfiguriert wie das System 10, welches im Zusammenhang mit Fig. 1 und Fig. 2 zuvor beschrieben wurde. Auf obige Ausführungen wird verwiesen.

Die Prüfeinheit 600 ist ausgebildet und programmiert ist, um das Simulationsergebnis zu evaluieren und um ein korrespondierendes Evaluierungsergebnis zu generieren. Die Evaluierung erfolgt insbesondere hinsichtlich einer Plausibilität und/oder einer Geeignetheit für einen Schweißbetrieb in der Schweißvorrichtung 20. Das Evaluierungsergebnis kann ein positives Evaluierungsergebnis oder ein negatives Evaluierungsergebnis sein.

Das Evaluierungsergebnis kann als Entscheidungskriterium genutzt werden, beispielsweise durch den Benutzer 120, ob das Schweißprogramm tatsächlich auf die Schweißvorrichtung übermittelt werden sollte - üblicherweise bei einem positiven Evaluierungsergebnis - oder ob noch Korrekturen an dem Schweißprogramm vorgenommen werden sollen - i.d.R. bei einem negativen Evaluierungsergebnis.

In der Speichereinheit 700 ist ein Musterdatensatz für die Evaluierung durch die Prüfeinheit 600 gespeichert.

Dieser Musterdatensatz kann analog zu den zuvor beschriebenen Informationen, die von dem Benutzer 120 mittels der Eingabeeinheit 100 empfangbar sind, zumindest eines der Folgenden aufweisen: mindestens eine Schweißprozessvariable, mindestens eine Zeitreihe von mindestens einer Schweißprozessvariablen, mindestens einen Extremwert einer Schweißprozessvariablen und/oder mindestens einen Gradienten einer Schweißprozessvariablen.

Die Prüfeinheit 600 ist in der Lage, auf den Musterdatensatz zuzugreifen und anhand des Musterdatensatzes das Simulationsergebnis zu evaluieren. Das Evaluationsergebnis ist dem Benutzer 120 beispielsweise mittels der Bildanzeige 410 grafisch bereitstellbar.

Die zuvor beschriebene Evaluierung mittels der Prüfeinheit 600 kann alternativ oder ergänzend zu der im Zusammenhang mit Fig. 1 und Fig. 2 beschriebenen Evaluierung durch den Benutzer 120 erfolgen.

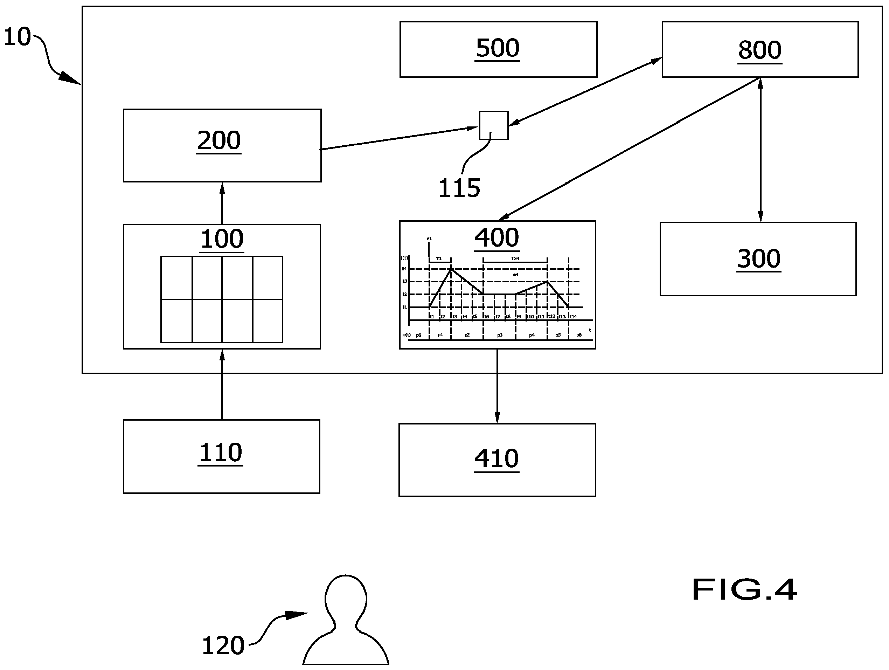

Bezugnehmend auf Fig. 4 weist das System 10 ferner einen Server 800 auf, der eine Vermittlungseinrichtung ausbildet. Die Simulationseinheit 300 ist hier von den anderen Komponenten des Systems 10, insbesondere der Eingabeeinheit 100, der Entwicklungseinheit 200 und der Ausgabeeinheit 400, örtlich getrennt und separat eingerichtet. Ansonsten ist das System 10 im Wesentlichen konfiguriert wie das System 10, welches im Zusammenhang mit Fig. 1 und Fig. 2 zuvor beschrieben wurde. Auf obige Ausführungen wird verwiesen.

Hier ist der Server 800 konfiguriert, um die mindestens eine Datei 115 / das Schweißprogramm von der Entwicklungseinheit 200 an die Simulationseinheit 300 zu übermitteln und um das Simulationsergebnis von der Simulationseinheit 300 an die Ausgabeeinheit 400 zu übermitteln.

In Fig. 5 ist die vorbestimmte Bedienoberfläche der Eingabeeinheit 100 in Form einer Tabellen-Struktur exemplarisch dargestellt.

Die Tabellen-Struktur weist eine Vorauswahl von Informationen auf, die durch den Benutzer 120 auswählbar sind, so dass die Informationen mittels der Auswahl eingebbar und folglich von der Eingabeeinheit 100 empfangbar sind.

Es kann zusätzlich oder alternativ vorgesehen sein, dass die Informationen durch den Benutzer 120 frei eingebbar sind.

Der Abschluss bzw. das Ende einer Informationseingabe kann durch den Benutzer 120 mittels einer Schalteinrichtung bestätigt werden, insbesondere einer Schaltfläche (beispielsweise der dargestellten "save & start"-Schaltfläche), die ein Teil der vorbestimmten Bedienoberfläche sein kann.

Mit der Betätigung der Schalteinrichtung werden die Informationen an die Entwicklungseinheit 100 zur Ausführung und weiteren Verarbeitung (d.h. zur Generierung der mindestens einen Datei 115/ des Schweißprogramms) übermittelt.

In Fig. 6 ist ein beispielhaftes Simulationsergebnis in grafischer Form dargestellt, wobei die grafische Form vorliegend ein Diagramm von acht Schweißprozessvariablen (d.h. Schweißprozessvariable A bis H) ist, die in Abhängigkeit von der Zeit dargestellt sind. Anhand einer solchen Darstellung ist es dem Benutzer 120 möglich, das Schweißverhalten des Schweißprogramms evaluieren zu können.

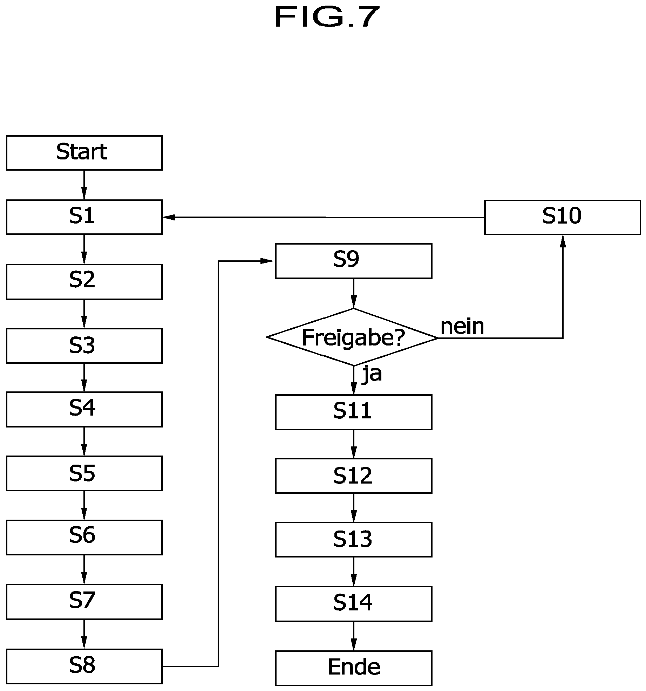

Bezugnehmend auf Fig. 7 wird nachfolgend ein bevorzugtes Ausführungsbeispiel eines Verfahrens zum Generieren eines Schweißprogramms für eine Schweißvorrichtung 20 erläutert, die eine Steuerungseinheit 22 umfasst. Beispielsweise eignet sich diese Ausführungsform des Verfahrens dazu, insbesondere mit dem in Fig. 1 gezeigten System ausgeführt zu werden.

Alle strukturellen und funktionellen Merkmale, die mit dem zuvor beschriebenen erfindungsgemäßen System und seinen Ausführungsformen verbunden sind, können auch in dem erfindungsgemäßen Verfahren entweder allein oder in Kombination umfasst sein und die damit verbundenen Eigenschaften, Ausgestaltungen und Vorteile können entsprechend ebenfalls umfasst sowie erzielt werden.

Bei dem Verfahren werden zunächst Informationen von einem Benutzer 120 mittels einer Eingabevorrichtung 110, S1 eingegeben.

Hierbei werden die Informationen in einer vorbestimmten Bedienoberfläche der Eingabeeinheit 100 entgegengenommen, insbesondere in Form einer Matrix-Struktur oder einer Tabellen-Struktur, wie in Fig. 5 exemplarisch dargestellt ist.

Die Informationen definieren einen Verlauf eines auf der Schweißvorrichtung 20 durchführbaren Schweißprozesses.

Die Informationen weisen zumindest eines der Folgenden auf: mindestens eine Schweißprozessvariable, mindestens eine Zeitreihe von mindestens einer Schweißprozessvariablen, mindestens einen Extremwert einer Schweißprozessvariablen und/oder mindestens einen Gradienten einer Schweißprozessvariablen.

Diese empfangenen Informationen werden einer Entwicklungseinheit 200 bereitgestellt, S2.

Basierend auf den Informationen generiert die Entwicklungseinheit 200 mindestens eine Datei 115, S3, die auf die Schweißvorrichtung 20 übermittelbar ist und auf Basis derer das Schweißprogramm auf der Schweißvorrichtung 20 mittels der Steuerungseinheit 22 ausführbar ist.

In anderen Worten bildet die mindestens eine Datei 115 gewissermaßen das Schweißprogramm.

Das Generieren S3 der mindestens einen Datei 115 kann ferner aufweisen: Integrieren einer von der Steuerungseinheit 22 der Schweißvorrichtung 20 interpretierbaren Nutzungsdauer-Funktion und einer von der Steuerungseinheit 22 der Schweißvorrichtung 20 interpretierbaren Freigabe-Funktion in der mindestens einen Datei 115.

Die Nutzungsdauer-Funktion ist ausgelegt und programmiert, dass das Schweißprogramm für eine vorbestimmte Nutzungsdauer auf der Schweißvorrichtung 20 ausführbar ist.

Die Freigabe-Funktion ist ausgelegt und programmiert, dass nach Ablauf der vorbestimmten Nutzungsdauer diese verlängerbar ist und das Schweißprogramm auf der Schweißvorrichtung 20 weiter ausführbar ist.

Die mindestens eine Datei 115/ das Schweißprogramm wird dann einer Simulationseinheit 300 zum Simulieren bereitgestellt, S4.

Die Simulationseinheit 300 ist ausgebildet und programmiert, um zu der Steuerungseinheit 22 der Schweißvorrichtung 20 hinsichtlich einer funktionalen Äquivalenz oder einer funktionalen Identität rechnerisch korrespondierend nachgebildet zu sein.

Basierend auf der mindestens einen Datei 115 simuliert die Simulationseinheit 300 das Schweißprogramm, das auf Basis der mindestens einen Datei 115 auf der Schweißvorrichtung 20 mittels der Steuerungseinheit 22 ausführbar ist, in einer funktional äquivalenten oder einer funktional identischen Weise im Hinblick auf die Steuerungseinheit 22, S5.

Sobald die Simulation abgeschlossen ist, generiert die Simulationseinheit 300 ein dazu korrespondierendes Simulationsergebnisses, S6.

Dieses Simulationsergebnisses wird an eine Ausgabeeinheit 400 bereitgestellt, S7. Die Ausgabeeinheit 400 stellt das von der Simulationseinheit 300 generierte Simulationsergebnis dem Benutzer 120 über eine Anzeigeeinheit 410 bereit, S8.

Das Bereitstellen S8 des von der Simulationseinheit generierten Simulationsergebnisses an den Benutzer 120 erfolgt in grafischer Form, insbesondere in Form einer Bilddarstellung, insbesondere eines Diagramms von mindestens einer Schweißprozessvariablen abhängig von der Zeit, wie in Fig. 6 beispielhaft dargestellt ist.

Zusätzlich oder alternativ kann das Simulationsergebnis in Form eines Simulationsberichts bereitgestellt werden.

Ausgehend von dem bereitgestellten Simulationsergebnis wird dieses von dem Benutzer 120 evaluiert, S9.

Dies erfolgt insbesondere hinsichtlich einer Plausibilität und/oder einer Geeignetheit für einen Schweißbetrieb in der Schweißvorrichtung 20.

Kommt der Benutzer 120 zu dem Schluss, dass das Simulationsergebnis einem geplanten und/oder einem ausgelegten Schweißverhalten des Schweißprogramms (simulativ) nicht entspricht, gibt der Benutzer 120 das Simulationsergebnis nicht frei, S10.

Kommt der Benutzer 120 zu dem Schluss, dass das Simulationsergebnis einem geplanten und/oder einem ausgelegten Schweißverhalten des Schweißprogramms (simulativ) entspricht, gibt der Benutzer 120 das Simulationsergebnis frei, S11.

Das Freigeben S11 und das Nicht-Freigeben S10 durch den Benutzer 120 definieren jeweilig ein voneinander unterschiedliches Evaluierungsergebnis. Das Freigeben S11 definiert ein positives Evaluierungsergebnis und das Nicht-Freigeben S10 definiert ein negatives Evaluierungsergebnis.

Es kann auch vorgesehen sein, dass das Verfahren zusätzlich parallel zu den Schritten S9 bis S11 oder alternativ zu den Schritten S9 bis S11 aufweist: Bereitstellen des Simulationsergebnisses an eine Prüfeinheit 600, Evaluieren des Simulationsergebnisses, insbesondere hinsichtlich einer Plausibilität und/oder einer Geeignetheit für einen Schweißbetrieb in der Schweißvorrichtung, mittels der Prüfeinheit 600, und Generieren eines korrespondierenden Evaluierungsergebnisses, beispielsweise eines positiven oder eines negativen Evaluierungsergebnisses. Dies bietet die Möglichkeit einer erweiterten Kontrolle. Dadurch wird dem Benutzer 120 eine zusätzliche Möglichkeit gegeben, seine eigene Evaluierung kontrollieren zu können und/oder eine zusätzliche automatische Evaluierung durchführen zu können.

Das Evaluieren S9 des Simulationsergebnisses kann ein Vergleichen des Simulationsergebnisses mit einem Musterdatensatz aufweisen, der in einer Speichereinheit 700 gespeichert ist und der zumindest eines der Folgenden aufweist: mindestens eine Schweißprozessvariable, mindestens eine Zeitreihe von mindestens einer Schweißprozessvariablen, mindestens einen Extremwert einer Schweißprozessvariablen und/oder mindestens einen Gradienten einer Schweißprozessvariablen.

Liegt ein positives Evaluierungsergebnis vor, wird die mindestens eine Datei 115/ das Schweißprogramm an eine Kommunikationsschnittstelle 500 bereitgestellt, S12.

Liegt ein negatives Evaluierungsergebnis vor, kann der Benutzer 120 neue und/oder geänderte Informationen eingeben (S1) oder das Verfahren beenden (nicht in der Figur dargestellt).

Die Kommunikationsschnittstelle 500 ist mit der Schweißvorrichtung 20 über ein portables Speichermedium, kabellos und/oder kabelgebunden verbindbar für einen Datenaustausch und mittels dieser ist die mindestens eine Datei 115 / das Schweißprogramm auf die Schweißvorrichtung 20 über das portable Speichermedium, kabellos und/oder kabelgebunden übermittelbar, wenn die Kommunikationsschnittstelle 500 mit der Schweißvorrichtung 20 zum Datenaustausch verbunden ist.

Um den Datenaustausch mit der Schweißvorrichtung zu ermöglichen, wird die Kommunikationsschnittstelle 500 mit der Schweißvorrichtung 20 verbunden, insbesondere mit einer Schweißvorrichtung-Kommunikationsschnittstelle 24, S13. Denkbar ist eine kabellose und/oder kabelgebundene Verbindung. Alternativ wird das portable Speichermedium zur Übertragung der mindestens einen Datei 115 eingesetzt.

Anschließend wird die mindestens eine Datei 115/ das Schweißprogramm an die Schweißvorrichtung 20 mittels der Kommunikationsschnittstelle 500 übermittelt, S14.

Nachdem die mindestens eine Datei 115/ das Schweißprogramm an die Schweißvorrichtung 20 übermittelt wurde, ist diese in der Lage, praktisch zu schweißen bzw. den Schweißbetrieb zu beginnen mittels des Schweißprogramms, welches auf Basis der mindestens einen Datei 115 von der Steuerungseinheit 22 ausgeführt werden kann bzw. ausführbar ist.

## Patentansprüche

1. System (10) zum Generieren eines Schweißprogramms für eine Schweißvorrichtung (20), die eine Steuerungseinheit (22) umfasst, aufweisend:
eine Eingabeeinheit (100) zum Empfangen von Informationen, die einen Verlauf eines auf der Schweißvorrichtung (20) durchführbaren Schweißprozesses definieren, von einem Benutzer (120),
eine Entwicklungseinheit (200), die ausgebildet und programmiert ist, um mindestens eine Datei, die auf die Schweißvorrichtung (20) übermittelbar ist und auf Basis derer das Schweißprogramm auf der Schweißvorrichtung (20) mittels der Steuerungseinheit (22) ausführbar ist, zu generieren basierend auf den Informationen,
eine Simulationseinheit (300), die ausgebildet und programmiert ist, um zu der Steuerungseinheit (22) der Schweißvorrichtung (20), für welche das Schweißprogramm generierbar ist mittels der Entwicklungseinheit (200), rechnerisch korrespondierend nachgebildet zu sein hinsichtlich einer funktionalen Äquivalenz oder einer funktionalen Identität, und die ferner ausgebildet und programmiert ist, um das Schweißprogramm, das auf Basis der mindestens einen Datei auf der Schweißvorrichtung (20) mittels der Steuerungseinheit (22) ausführbar ist, funktional äquivalent oder funktional identisch zu der Steuerungseinheit (22) zu simulieren basierend auf der mindestens einen Datei, um ein dazu korrespondierendes Simulationsergebnis zu generieren, und
eine Ausgabeeinheit (400) zum Bereitstellen des von der Simulationseinheit (300) generierten Simulationsergebnisses an den Benutzer (120).

2. System (10) nach Anspruch 1, **dadurch gekennzeichnet, dass** das System (1) eine Prüfeinheit (600) umfasst, die ausgebildet und programmiert ist, um das Simulationsergebnis, insbesondere hinsichtlich einer Plausibilität und/oder einer Geeignetheit für einen Schweißbetrieb in der Schweißvorrichtung (20), zu evaluieren und um ein korrespondierendes Evaluierungsergebnis zu generieren.

3. System (10) nach Anspruch 2, **dadurch gekennzeichnet, dass** das System (10) eine Speichereinheit (700) aufweist, in der ein Musterdatensatz gespeichert ist, der zumindest eines der Folgenden aufweist: mindestens eine Schweißprozessvariable, mindestens eine Zeitreihe von mindestens einer Schweißprozessvariablen, mindestens ein Extremwert einer Schweißprozessvariablen und/oder mindestens ein Gradient einer Schweißprozessvariablen, und wobei die Prüfeinheit (600) ferner ausgebildet und programmiert ist, um auf den Musterdatensatz zuzugreifen und anhand des Musterdatensatzes das Simulationsergebnis zu evaluieren.

4. System (10) nach einem der voranstehenden Ansprüche, **dadurch gekennzeichnet, dass** die Entwicklungseinheit (200) ferner ausgebildet und programmiert ist, um die mindestens eine Datei mit einer von der Steuerungseinheit (22) der Schweißvorrichtung (20) interpretierbaren Nutzungsdauer-Funktion zu versehen, so dass das Schweißprogramm nur für eine vorbestimmte Nutzungsdauer auf der Schweißvorrichtung (20) ausführbar ist.

5. System (10) nach Anspruch 4, **dadurch gekennzeichnet, dass** die Entwicklungseinheit (200) ferner ausgebildet und programmiert ist, um die mindestens eine Datei mit einer von der Steuerungseinheit (22) der Schweißvorrichtung (20) interpretierbaren Freigabe-Funktion zu versehen, so dass nach Ablauf der vorbestimmten Nutzungsdauer diese verlängerbar ist und das Schweißprogramm auf der Schweißvorrichtung (20) weiterhin ausführbar ist.

6. Verfahren zum Generieren eines Schweißprogramms für eine Schweißvorrichtung (20), die eine Steuerungseinheit (22) umfasst, umfassend: Empfangen (S1) von Informationen, die einen Verlauf eines auf der Schweißvorrichtung (20) durchführbaren Schweißprozesses definieren, von einem Benutzer (120) mittels einer Eingabeeinheit (100), Bereitstellen (S2) der Informationen an eine Entwicklungseinheit (200), Generieren (S3) von mindestens einer Datei, die auf die Schweißvorrichtung (20) übermittelbar ist und auf Basis derer das Schweißprogramm auf der Schweißvorrichtung (20) mittels der Steuerungseinheit (22) ausführbar ist, basierend auf den Informationen mittels der Entwicklungseinheit (200),
Bereitstellen (S4) der mindestens einen Datei an eine Simulationseinheit (300),
Simulieren (S5) des Schweißprogramms, das auf Basis der mindestens einen Datei auf der Schweißvorrichtung (20) mittels der Steuerungseinheit (22) ausführbar ist, mittels der Simulationseinheit (300), wobei die Simulationseinheit (300) ausgebildet und programmiert ist, um zu der Steuerungseinheit (22) der Schweißvorrichtung (20) rechnerisch korrespondierend nachgebildet zu sein hinsichtlich einer funktionalen Äquivalenz oder einer funktionalen Identität, und wobei das Simulieren (S5) funktional äquivalent oder funktional identisch zu der Steuerungseinheit (22) erfolgt basierend auf der mindestens einen Datei,
Generieren (S6) eines dazu korrespondierenden Simulationsergebnisses mittels der Simulationseinheit (300),
Bereitstellen (S7) des Simulationsergebnisses für eine Ausgabeeinheit (400), und
Bereitstellen (S8) des von der Simulationseinheit (300) generierten Simulationsergebnisses an den Benutzer (120) mittels der Ausgabeeinheit (400).

7. Verfahren nach Anspruch 6, **dadurch gekennzeichnet, dass** das Verfahren ferner aufweist:
Evaluieren (S9) des Simulationsergebnisses, insbesondere hinsichtlich einer Plausibilität und/oder einer Geeignetheit für einen Schweißbetrieb in der Schweißvorrichtung (20), durch den Benutzer (120), und
Freigeben (S11) oder Nicht-Freigeben (S10) des Simulationsergebnisses durch den Benutzer (120), wobei die Freigabe und die Nicht-Freigabe durch den Benutzer (120) jeweilig ein voneinander unterschiedliches Evaluierungsergebnis definieren.

8. Verfahren nach Anspruch 6 oder 7, **dadurch gekennzeichnet, dass** das Verfahren ferner aufweist:
Bereitstellen des Simulationsergebnisses an eine Prüfeinheit (600), Evaluieren des Simulationsergebnisses, insbesondere hinsichtlich einer Plausibilität und/oder einer Geeignetheit für einen Schweißbetrieb in der Schweißvorrichtung, mittels der Prüfeinheit (600), und
Generieren eines korrespondierenden Evaluierungsergebnisses.

9. Verfahren nach Anspruch 7 oder 8, **dadurch gekennzeichnet, dass** das Evaluieren (S9) des Simulationsergebnisses Vergleichen des Simulationsergebnisses mit einem Musterdatensatz aufweist, der in einer Speichereinheit (700) gespeichert ist und der zumindest eines der Folgenden aufweist: mindestens eine Schweißprozessvariable, mindestens eine Zeitreihe von mindestens einer Schweißprozessvariablen, mindestens ein Extremwert einer Schweißprozessvariablen und/oder mindestens ein Gradient einer Schweißprozessvariablen.

10. Verfahren nach einem der Ansprüche 6 bis 9, **dadurch gekennzeichnet, dass** das Verfahren ferner aufweist:
Bereitstellen (S12) der mindestens einen Datei an eine Kommunikationsschnittstelle (500), die mit der Schweißvorrichtung (20) über ein portables Speichermedium, kabellos und/oder kabelgebunden verbindbar ist für einen Datenaustausch und mittels derer die mindestens eine Datei auf die Schweißvorrichtung (20) über das portable Speichermedium, kabellos und/oder kabelgebunden übermittelbar ist, wenn die Kommunikationsschnittstelle (500) mit der Schweißvorrichtung (20) zum Datenaustausch verbunden ist,
Verbinden (S13) der Kommunikationsschnittstelle (500) mit der Schweißvorrichtung (20), um die mindestens eine Datei an die Schweißvorrichtung (20) zu übermitteln, und
Übermitteln (S14) der mindestens einen Datei an die Schweißvorrichtung (20) mittels der Kommunikationsschnittstelle (500).

11. Verfahren nach Anspruch 10 in Verbindung mit einem der Ansprüche 7 bis 9, **dadurch gekennzeichnet, dass** das Bereitstellen (S12) der mindestens einen Datei an die Kommunikationsschnittstelle (500), das Verbinden (S13) der Kommunikationsschnittstelle (500) mit der Schweißvorrichtung (20) und das Übermitteln (S14) der mindestens einen Datei an die Schweißvorrichtung (20) nur erfolgen, wenn ein vorbestimmtes Evaluierungsergebnis vorliegt.

12. Verfahren nach einem der Ansprüche 6 bis 11, **dadurch gekennzeichnet, dass** das Generieren (S3) der mindestens einen Datei ein Integrieren einer von der Steuerungseinheit (22) der Schweißvorrichtung (20) interpretierbaren Nutzungsdauer-Funktion in der mindestens einen Datei aufweist, so dass das Schweißprogramm nur für eine vorbestimmte Nutzungsdauer auf der Schweißvorrichtung (20) ausführbar ist.

13. Verfahren nach Anspruch 12, **dadurch gekennzeichnet, dass** das Generieren (S3) der mindestens einen Datei ein Integrieren einer von der Steuerungseinheit (22) der Schweißvorrichtung (20) interpretierbaren Freigabe-Funktion in der mindestens einen Datei aufweist, so dass nach Ablauf der vorbestimmten Nutzungsdauer diese verlängerbar ist und das Schweißprogramm auf der Schweißvorrichtung (20) weiter ausführbar ist.

14. Computerprogrammprodukt, umfassend
Befehle, die bei der Ausführung des Computerprogrammprodukts durch ein System (10) gemäß einem der Ansprüche 1 bis 5 dieses veranlassen, ein Verfahren gemäß einem der Ansprüche 6 bis 13 auszuführen.

15. Computerlesbares Speichermedium, auf dem ein Computerprogrammprodukt gemäß Anspruch 14 gespeichert ist.
